(19) Europäisches Patentamt
European Patent Office
Office européen des brevets

(11) Veröffentlichungsnummer: **0 136 501**
**B1**

(12) **EUROPÄISCHE PATENTSCHRIFT**

(45) Veröffentlichungstag der Patentschrift: **11.05.88**

(51) Int. Cl.⁴: **C 07 F 7/18**, C 09 K 19/40, G 02 F 1/13

(21) Anmeldenummer: **84109789.2**

(22) Anmeldetag: **16.08.84**

(54) **Trialkanoyloxysilane.**

(30) Priorität: **01.09.83 DE 3331515**

(43) Veröffentlichungstag der Anmeldung: **10.04.85 Patentblatt 85/15**

(45) Bekanntmachung des Hinweises auf die Patenterteilung: **11.05.88 Patentblatt 88/19**

(84) Benannte Vertragsstaaten: **CH DE FR GB LI**

(56) Entgegenhaltungen: **US - A - 4 316 041**

(73) Patentinhaber: **Merck Patent Gesellschaft mit beschränkter Haftung, Frankfurter Strasse 250, D-6100 Darmstadt (DE)**

(72) Erfinder: **Kreuzer, Franz-Heinrich, Dr., Josef-Gerstner-Strasse 14d, D-8033 Martinsried (DE)**
Erfinder: **Eidenschink, Rudolf, Dr., Kornblumenstrasse 1, D-6115 Münster (DE)**
Erfinder: **Weber, Georg, Wilhelm-Leuschner-Strasse 38, D-6106 Erzhausen (DE)**

**EP 0 136 501 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Trialkanoyloxysilane der Formel I

$R^1-A^1-A^2-O-C_nH_{2n}-Si(OOCR^2)_3$ I

worin
$R^1$ H, eine Alkylgruppe mit 1-10 C-Atomen, worin auch eine oder zwei nicht benachbarte $CH_2$-Gruppen durch O-Atome ersetzt sein können, F, Cl, Br oder CN,
$R^2$ eine Alkylgruppe mit 1-5 C-Atomen,
$A^1$ und $A^2$ jeweils 1,4-Phenylen- oder 1,4-Cyclohexylengruppen und
n 2, 3, 4, 5 oder 6
bedeuten.

Die Verbindungen der Formel I eignen sich in ausgezeichneter Weise zur homöotropen Ausrichtung flüssigkristalliner Phasen auf Oberflächen, z.B. Glasplatten, die auch beschichtet sein können, wie sie bei der Herstellung elektrooptischer Anzeigeelemente verwendet werden. Derart orientierte flüssigkristalline Phasen können auf Grund ihrer negativen dielektrischen Anisotropie von einem äusseren elektrischen Feld in ihrer Ausrichtung beeinflusst werden. Sie eignen sich zu einer Verwendung in Anzeigen, die nach dem Prinzip der Deformation aufgerichteter Phasen (Appl. Phys. Lett. 19, 391 (1971)), dem Prinzip der dynamischen Streuung (Proc. IEEE 56, 1162 (1968)) oder nach dem Guest-Host-Prinzip (Mol. Cryst. Liq. Cryst. 63, 19 (1981)) betrieben werden.

Die Erzeugung einer gleichförmigen und stabilen homöotropen Orientierung flüssigkristalliner Phasen war bisher technologisch recht schwierig. So wurde die verwendete flüssigkristalline Phase mit oberflächenaktiven Stoffen wie Lecithinen, langkettigen aliphatischen Aminen, quartären Ammonium- oder Phosphoniumsalzen oder Carboxylatochrom-Komplexen (Appl. Phys. Lett. 27, 268 (1975)) dotiert. Üblich war auch eine Beschichtung von Glasoberflächen mit den genannten Stoffen vor der Einfüllung der flüssigkristallinen Phase. Gleichmässigkeit und Stabilität der so erzeugten homöotropen Orientierung der flüssigkristallinen Phasen lassen jedoch zu wünschen übrig.

Der Erfindung lag die Aufgabe zugrunde, eine bessere, insbesondere gleichmässigere und stabilere homöotrope Orientierung flüssigkristalliner Phasen auf Oberflächen zu ermöglichen. Diese Aufgabe wurde durch die Bereitstellung der Verbindungen der Formel I gelöst.

Gegenstand der Erfindung sind somit die Verbindungen der Formel I sowie ein Verfahren zu ihrer Herstellung, dadurch gekennzeichnet, dass man ein Trichlorsilan der Formel II

$R^1-A^1-A^2-O-C_nH_{2n}-SiCl_3$ II

worin
$R^1$, $A^1$, $A^2$ und n die angegebenen Bedeutungen haben, mit einem Säureanhydrid der Formel III

$(R^2CO)_2O$ III

worin
$R^2$ die angegebene Bedeutung hat umsetzt.

Weiterhin sind Gegenstand der Erfindung die Verwendung der Verbindungen der Formel I als Komponenten flüssigkristalliner Dielektrika für elektrooptische Anzeigeelemente sowie ihre Verwendung zur Erzeugung einer homöotropen Orientierung flüssigkristalliner Phasen auf Oberflächen. Gegenstand der Erfindung sind ferner flüssigkristalline Dielektrika mit einem Gehalt an mindestens einer Verbindung der Formel I sowie elektrooptische Anzeigeelemente, die derartige Dielektrika enthalten und/oder die Oberflächen enthalten, welche mit einer Verbindung der Formel I behandelt worden sind.

Vor- und nachstehend haben $R^1$, $R^2$, $A^1$, $A^2$ und n die angegebene Bedeutung, sofern nicht ausdrücklich etwas anderes vermerkt ist.

Nach der Definition der Gruppen $A^1$ und $A^2$ umfassen die Verbindungen der Formel I solche der Teilformeln Ia bis Id:

$R^1-Phe-Phe-O-C_nH_{2n}-Si(OOCR^2)_3$ Ia
$R^1-Cy-Phe-O-C_nH_{2n}-Si(OOCR^2)_3$ Ib
$R^1-Phe-Cy-O-C_nH_{2n}-Si(OOCR^2)_3$ Ic
$R^1-Cy-Cy-O-C_nH_{2n}-Si(OOCR^2)_3$ Id.

In diesen Formeln bedeuten Phe 1,4-Phenylen und Cy 1,4-Cyclohexylen. Verbindungen der Formeln Ib und Id sind bevorzugt.

In den Verbindungen der vor- und nachstehenden Formeln bedeutet $R^1$ vorzugsweise Alkyl, ferner Alkoxy (insbesondere wenn dieser Rest an einer Phe-Gruppe steht) oder eine andere Oxaalkylgruppe.

Der Parameter n hat vorzugsweise den Wert 3. Der Rest $C_nH_{2n}$ ist vorzugsweise geradkettig und steht dementsprechend insbesondere für $-(CH_2)_3-$, ferner insbesondere für $-(CH_2)_2-$, $-(CH_2)_4-$, $-(CH_2)_5-$ oder $-(CH_2)_6-$.

In den Verbindungen der vor- und nachstehenden Formeln können die Alkylreste geradkettig oder verzweigt sein. Vorzugsweise sind sie geradkettig, haben 1, 2, 3, 4 oder 5, im Falle von $R^1$ auch 6 oder 7 C-Atome und bedeuten demnach bevorzugt Methyl, Ethyl, Propyl, Butyl, Pentyl, im Falle von $R^1$ auch Hexyl oder Heptyl. $R^1$ kann auch eine Alkylgruppe bedeuten, worin eine («Alkoxy» bzw. «Oxaalkyl») oder 2 («Alkoxyalkoxy» bzw. «Dioxaalkyl») nicht benachbarte $CH_2$-Gruppen durch O-Atome ersetzt sein können, bevorzugt Methoxy, Ethoxy, Propoxy, Butoxy, Pentoxy, Hexoxy, Heptoxy, 2-Oxapropyl (= Methoxymethyl), 2- (= Ethoxymethyl) oder 3-Oxabutyl (= 3-Methoxyethyl), 2-, 3- oder 4-Oxapentyl, 2-, 3-, 4- oder 5-Oxahexyl, 2-, 3-, 4-, 5- oder 6-Oxaheptyl.

$R^1$ kann ferner beispielsweise bedeuten Octyl, Nonyl, Decyl, Octoxy, Nonoxy, Decoxy, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4- oder 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-,

2,6-, 3,5-, 3,6- oder 4,6-Dioxaheptyl. Bevorzugte Bedeutungen des Restes $R^1$ sind ferner F, Cl, Br oder CN.

Verbindungen der Formeln I sowie Ia bis Id mit verzweigten Resten $R^1$ und/oder $R^2$ können gelegentlich wegen einer besseren Löslichkeit in den üblichen flüssigkristallinen Basismaterialien von Bedeutung sein, ferner auch als Dotierstoffe, wenn sie optisch aktiv sind. Verzweigte Gruppen dieser Art enthalten in der Regel nicht mehr als eine Kettenverzweigung. Bevorzugte verzweigte Reste $R^1$ und $R^2$ sind Isopropyl, 2-Butyl (= 1-Methylpropyl), Isobutyl (= 2-Methylpropyl), 2-Methylbutyl, Isopentyl (= 3-Methylbutyl); $R^1$ kann ferner bedeuten 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 1-Methylhexoxy, 1-Methylheptoxy, 2-Ethylhexoxy, 2-Oxa-3-methylbutyl, 3-Oxa-4-methylpentyl. Im einzelnen ist der Rest $R^2$ bevorzugt eine Methylgruppe.

Falls die Gruppen $A^1$ und/oder $A^2$ in 1- und 4-Stellung disubstituierte Cyclohexylengruppen bedeuten, so können die Substituenten in cis- oder trans-Stellung stehen. Die Verbindungen mit trans-Konfiguration sind bevorzugt.

Verbindungen der Formel I mit optisch-aktiven C-Atomen umschliessen sowohl die Racemate als auch die entsprechenden optisch-aktiven Enantiomeren sowie deren Gemische.

Die Verbindungen der Formel I können nach an sich bekannten Methoden hergestellt werden, wie sie in der Literatur (z.B. in den Standard-Werken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe, insbesondere diejenigen der Formel II können gewünschtenfalls auch in situ gebildet werden, derart, dass man sie aus dem Reaktionsgemisch nicht isoliert, sondern sofort weiter zu den Verbindungen der Formel I umsetzt.

Die Trichlorsilane der Formel II sind neu. Sie können beispielsweise hergestellt werden, indem man einen ungesättigten Ether der Formel IV

$$R^1\text{-}A^1\text{-}A^2\text{-}O\text{-}C_nH_{2n-1} \qquad \text{IV}$$

mit Trichlorsilan umsetzt.

Die Ether der Formel IV können ihrerseits durch Alkenylierung von Hydroxyverbindungen der Formel V

$$R^1\text{-}A^1\text{-}A^2\text{-}OH \qquad \text{V}$$

mit einem entsprechenden Alkenylhalogenid der Formel $C_nH_{2n-1}Cl$ oder $C_nH_{2n-1}Br$ hergestellt werden.

Die Addition von Trichlorsilan an die ungesättigten Ether der Formel IV gelingt zweckmässig in Gegenwart eines inerten Lösungsmittels, z.B. eines halogenierten Kohlenwasserstoffs wie Dichlormethan bei Temperaturen zwischen etwa 0 und etwa 100°, zweckmässig bei Siedetemperatur. Trichlorsilan wird vorteilhaft im Überschuss eingesetzt. Der Zusatz eines Edelmetallkatalysators, beispielsweise einer Lösung von $H_2PtCl_6$ in Isopropanol, ist dabei vorteilhaft. Das erhaltene Produkt der Formel II wird zweckmässig nicht aufgereinigt, sondern in rohem Zustand mit dem Säureanhydrid der Formel III umgesetzt, wobei man zweckmässigerweise kein zusätzliches Lösungsmittel zugibt, sondern einen Überschuss des Anhydrids als Lösungsmittel verwendet. Die Reaktionstemperaturen liegen zweckmässig zwischen etwa 50 und etwa 200°, vorzugsweise zwischen 120 und 160°.

Die Verbindungen der Formel I können unmittelbar zur Beschichtung der zu behandelnden Oberflächen verwendet werden. Zur Beschichtung eignen sich insbesondere oxidische Oberflächen, z.B. solche von Metall-, Halbmetall- oder Nichtmetalloxiden, vor allem aber Glasoberflächen.

Man beschichtet zweckmässig, indem man die vorher gereinigten Oberflächen mit einer etwa 0,1 bis 1%igen Lösung einer Verbindung der Formel I in einem inerten Lösungsmittel, z.B. einem halogenierten Kohlenwasserstoff wie Dichlormethan, benetzt, das Lösungsmittel verdampft, einer wasserdampfhaltigen Atmosphäre aussetzt, um die Esterbindungen zu hydrolysieren, und anschliessend kurz erhitzt; dabei entsteht ein dünner Film von hochmolekularen Hydrolyseprodukten.

Man kann aber auch eine oder mehrere Verbindungen der Formel I als Dotierstoffe flüssigkristallinen Dielektrika zusetzen, wobei diese Dielektrika etwa 0,01 bis 1, vorzugsweise etwa 0,05 bis 0,5%, an I enthalten.

Die erfindungsgemässen Dielektrika bestehen aus 2 bis 15, vorzugsweise 3 bis 12 Komponenten, darunter mindestens einer Verbindung der Formel I. Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbon-säurephenyl- oder -cyclohexyl-ester, Phenylcyclohexane, Cyclohexylbiphenyle, Cyclohexylcyclohexane, Cyclohexylnaphthaline, 1,4-Bis-cyclohexylbenzole, 4,4'-Bis-cyclohexylbiphenyle, Phenyl- oder Cyclohexyl-pyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger flüssigkristalliner Dielektrika in Frage kommenden Verbindungen lassen sich durch die Formel VI charakterisieren,

$$R'\text{-}L\text{-}G\text{-}E\text{-}R'' \qquad \text{VI}$$

worin L und E je ein carbo- oder heterocyclisches

Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CY- | -CH=N(O)- |
| | -C≡C- | $-CH_2-CH_2$ |
| | -CO-O- | $-CH_2-O-$ |
| | -CO-S- | $-CH_2-S-$ |
| | -CH=N- | -COO-Phe-COO- |

oder eine C–C-Einfachbindung, Y Halogen, vorzugsweise Chlor, oder -CN, und R' und R'' Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindungen sind R' und R'' voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich.

Die Herstellung der erfindungsgemässen Dielektrika erfolgt in an sich üblicher Weise. In der Regel werden die Komponenten ineinander gelöst, zweckmässig bei erhöhter Temperatur.

Durch geeignete Zusätze können die flüssigkristallinen Dielektrika nach der Erfindung so modifiziert werden, dass sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronenethern (vgl. z. B. I. Haller et al., Mol. Cryst. Liq. Cryst. Band 24, Seiten 249–258 (1973) zur Verbesserung der Leitfähigkeit, dichroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden. Derartige Substanzen sind z.B. in den DE-OS 22 09 127, 22 40 864, 23 21 632, 23 38 281, 24 50 088, 26 37 430, 28 53 728 und 29 02 177 beschrieben.

Die folgenden Beispiele sollen die Erfindung erläutern, ohne sie zu begrenzen. F. = Schmelzpunkt, K. = Klärpunkt. Vor- und nachstehend bedeuten Prozentangaben Gewichtsprozent; alle Temperaturen sind in Grad Celsius angegeben.

Herstellungsbeispiel

Eine Lösung von 32,4 g 3-(p-trans-4-Propylcyclohexylphenoxy)-propen (F. 25–28°; erhältlich durch Reaktion von Na-p-trans-4-Propylcyclohexylphenolat mit Allylbromid) in 60 ml $CH_2Cl_2$ wird mit 26,8 g $HSiCl_3$, dann mit 0,5 ml einer 0,05 molaren Lösung von $H_2PtCl_6$ in Isopropanol versetzt. Nach zweitätigem Kochen wird das überschüssige $HSiCl_3$ abdestilliert. Das erhaltene rohe l-Trichlorsilyl-3-(p-trans-4-propylcyclohexylphenoy)-propan wird mit 76,8 g Acetanhydrid 5 Stunden gekocht. Nach dem Abdestillieren des überschüssigen Acetanhydrids erhält man l-Triacetoxysilyl-3-(p-trans-4-propylcyclohexylphenoxy)-propan, F. 36°, K. 65°.

Analog erhält man mit den entsprechenden Anhydriden:

1-Tripropionyloxysilyl-3-(p-trans-4-propylcyclohexyl-phenoxy)-propan
1-Tributyryloxysilyl-3-(p-trans-4-propylcyclohexyl-phenoxy)-propan
1-Triisobutyryloxysilyl-3-(p-trans-4-propylcyclohexyl-phenoxy)-propan
1-Trivaleryloxysilyl-3-(p-trans-4-propylcyclohexyl-phenoxy)-propan
1-Tricapronyloxysilyl-3-(p-trans-4-propylcyclohexyl-phenoxy)-propan
1-Triacetoxysilyl-3-p-cyclohexylphenoxy-propan
1-Triacetoxysilyl-3-(p-trans-4-methylcyclohexylphenoxy)-propan
1-Triacetoxysilyl-3-(p-trans-4-ethylcyclohexylphenoxy)-propan
1-Triacetoxysilyl-3-(p-trans-4-butylcyclohexylphenoxy)-propan
1-Triacetoxysilyl-3-(p-trans-4-isobutylcyclohexylphenoxy)-propan
1-Triacetoxysilyl-3-(p-trans-4-sek.-butylcyclohexyl-phenoxy)-propan
1-Triacetoxysilyl-3-(p-trans-4-pentylcyclohexylphenoxy)-propan
1-Triacetoxysilyl-3-(p-trans-4-hexylcyclohexylphenoxy)-propan
1-Triacetoxysilyl-3-(p-trans-4-heptylcyclohexylphenoxy)-propan
1-Triacetoxysilyl-3-(p-trans-4-octylcyclohexylphenoxy)-propan
1-Triacetoxysilyl-3-(p-trans-4-nonylcyclohexylphenoxy)-propan
1-Triacetoxysilyl-3-(p-trans-4-decylcyclohexylphenoxy)-propan
1-Triacetoxysilyl-3-p-biphenylyloxy-propan
1-Triacetoxysilyl-3-(4'-methyl-biphenylyl-4-oxy)-propan
1-Triacetoxysilyl-3-(4'-ethyl-biphenylyl-4-oxy)-propan
1-Triacetoxysilyl-3-(4'-propyl-biphenylyl-4-oxy)-propan
1-Triacetoxysilyl-3-(4'-butyl-biphenylyl-4-oxy)-propan
1-Triacetoxysilyl-3-(4'-pentyl-biphenylyl-4-oxy)-propan
1-Triacetoxysilyl-3-(4'-hexyl-biphenylyl-4-oxy)-propan
1-Triacetoxysilyl-3-(4'-heptyl-biphenylyl-4-oxy)-propan
1-Triacetoxysilyl-3-(4'-octyl-biphenylyl-4-oxy)-propan

1-Triacetoxysilyl-3-(4′-nonyl-biphenylyl-4-oxy)-propan
1-Triacetoxysilyl-3-(4′-decyl-biphenylyl-4-oxy)-propan
1-Triacetoxysilyl-3-(4′-methoxy-biphenylyl-4-oxy)-propan
1-Triacetoxysilyl-3-(4′-ethoxy-biphenylyl-4-oxy)-propan
1-Triacetoxysilyl-3-(4′-propoxy-biphenylyl-4-oxy)-propan
1-Triacetoxysilyl-3-(4′-butoxy-biphenylyl-4-oxy)-propan
1-Triacetoxysilyl-3-(4′-pentoxy-biphenylyl-4-oxy)-propan
1-Triacetoxysilyl-3-(4′-hexoxy-biphenylyl-4-oxy)-propan
1-Triacetoxysilyl-3-(4′-heptoxy-biphenylyl-4-oxy)-propan
1-Triacetoxysilyl-3-(4′-methoxymethyl-biphenylyl-4-oxy)-propan
1-Triacetoxysilyl-3-(4′-methoxymethoxy-biphenylyl-4-oxy)-propan
1-Triacetoxysilyl-3-(4′-fluor-biphenylyl-4-oxy)-propan
1-Triacetoxysilyl-3-(4′-chlor-biphenylyl-4-oxy)-propan
1-Triacetoxysilyl-3-(4′-brom-biphenylyl-4-oxy)-propan
1-Triacetoxysilyl-3-(4′-cyan-biphenylyl-4-oxy)-propan
1-Triacetoxysilyl-3-(trans-4-phenylcyclohexoxy)-propan
1-Triacetoxysilyl-3-(trans-4-p-tolylcyclohexoxy)-propan
1-Triacetoxysilyl-3-(trans-4-p-ethylphenylcyclohexoxy)-propan
1-Triacetoxysilyl-3-(trans-4-p-propylphenylcyclohexoxy)-propan
1-Triacetoxysilyl-3-(trans-4-p-butylphenylcyclohexoxy)-propan
1-Triacetoxysilyl-3-(trans-4-p-pentylphenylcyclohexoxy)-propan
1-Triacetoxysilyl-3-(trans-4-p-hexylphenylcyclohexoxy)-propan
1-Triacetoxysilyl-3-(trans-4-p-heptylphenylcyclohexoxy)-propan
1-Triacetoxysilyl-3-(trans-4-p-methoxyphenylcyclohexoxy)-propan
1-Triacetoxysilyl-3-(trans-4-p-ethoxyphenylcyclohexoxy)-propan
1-Triacetoxysilyl-3-(trans-4-p-propoxyphenylcyclohexoxy)-propan
1-Triacetoxysilyl-3-(trans-4-p-butoxyphenylcyclohexoxy)-propan
1-Triacetoxysilyl-3-(trans-4-p-pentoxyphenylcyclohexoxy)-propan
1-Triacetoxysilyl-3-(trans-4-p-fluorphenylcyclohexoxy)-propan
1-Triacetoxysilyl-3-(trans-4-p-chlorphenylcyclohexoxy)-propan
1-Triacetoxysilyl-3-(trans-4-p-bromphenylcyclohexoxy)-propan
1-Triacetoxysilyl-3-(trans-4-p-cyanphenylcyclohexoxy)-propan
1-Triacetoxysilyl-3-(trans-4-(trans-4-propylcyclohexyl)-cyclohexoxy)-propan
1-Triacetoxysilyl-3-(trans-4-(trans-4-butylcyclohexyl)-cyclohexoxy)-propan
1-Triacetoxysilyl-3-(trans-4-(trans-4-pentylcyclohexyl)-cyclohexoxy)-propan
1-Triacetoxysilyl-3-(trans-4-(trans-4-hexylcyclohexyl)-cyclohexoxy)-propan
1-Triacetoxysilyl-3-(trans-4-(trans-4-heptylcyclohexyl)-cyclohexoxy)-propan
1-Triacetoxysilyl-2-(p-trans-4-propylcyclohexylphenoxy)-ethan
1-Triacetoxysilyl-4-(p-trans-4-propylcyclohexylphenoxy)-butan
1-Triacetoxysilyl-5-(p-trans-4-propylcyclohexylphenoxy)-pentan
1-Triacetoxysilyl-6-(p-trans-4-propylcyclohexylphenoxy)-hexan
1-Triacetoxysilyl-2-methyl-3-(p-trans-4-propylcyclohexylphenoxy)-propan.

Formulierungsbeispiel (Dielektrikum):
Ein Gemisch aus

| | |
|---|---|
| 54% | Buttersäure-(p-trans-4-propylcyclohexylphenylester) |
| 26% | p-trans-4-Butylcyclohexylbenzoesäure-(trans-4-propylcyclohexylester) |
| 19,9% | p-trans-4-Propylcyclohexylbenzoesäure-(trans-4-propylcyclohexylester) |
| 0,1% | 1-Triacetoxysilyl-3-(p-trans-4-propylcyclohexylphenoxy)-propan |

zeigt K. 80°.

Anwendungsbeispiel: Beschichtung von Glasoberflächen

Die in 1,1,2-Trichlorethan-Dampf sorgfältig gereinigten Gläser werden mit einer 0,5%igen Lösung von 1-Triacetoxysilyl-3-(p-trans-4-propylcyclohexylphenoxy)-propan in $CH_2Cl_2$ benetzt und nach dem Verdampfen des Lösungsmittels in eine bei Raumtemperatur mit Wasserdampf gesättigte Atmosphäre übergeführt. Nach 10 Minuten erhitzt man 5 Minuten lang auf 120° und lässt dann abkühlen.

**Patentansprüche**

1. Trialkanoyloxysilane der Formel I

$$R^1-A^1-A^2-O-C_nH_{2n}-Si(OOCR^2)_3 \qquad I$$

worin
$R^1$ H, eine Alkylgruppe mit 1–10 C-Atomen, worin auch eine oder zwei nicht benachbarte $CH_2$-Gruppen durch O-Atome ersetzt sein können, F, Cl, Br oder CN,
$R^2$ eine Alkylgruppe mit 1–5 C-Atomen,
$A^1$ und $A^2$ jeweils 1,4-Phenylen- oder 1,4-Cyclohexylengruppen und
n 2, 3, 4, 5 oder 6
bedeuten.

2. 1-Triacetoxysilyl-3-(p-trans-4-propylcyclohexylphenoxy)-propan.

3. Verfahren zur Herstellung von Trialkanoyloxysilanen der Formel I nach Anspruch 1, dadurch gekennzeichnet, dass man ein Trichlorsilan der Formel II

$R^1-A^1-A^2-O-C_nH_{2n}-SiCl_3$ II

worin
$R^1$, $A^1$, $A^2$ und n die angegebenen Bedeutungen haben, mit einem Säureanhydrid der Formel III

$(R^2CO)_2O$ III

worin
$R^2$ die angegebene Bedeutung hat umsetzt.

4. Verwendung der Verbindungen der Formel I nach Anspruch 1 als Komponenten flüssigkristalliner Dielektrika für elektrooptische Anzeigeelemente.

5. Flüssigkristallines Dielektrikum für elektrooptische Anzeigeelemente mit mindestens zwei flüssigkristallinen Komponenten, dadurch gekennzeichnet, dass mindestens eine Komponente eine Verbindung der Formel I nach Anspruch 1 ist.

6. Elektrooptisches Anzeigeelement, dadurch gekennzeichnet, dass es ein Dielektrikum nach Anspruch 5 enthält.

7. Verwendung von Verbindungen der Formel I nach Anspruch 1 zur Erzeugung einer homöotropen Orientierung flüssig-kristalliner Phasen auf Oberflächen.

8. Elektrooptisches Anzeigeelement, dadurch gekennzeichnet, dass es Oberflächen enthält, welche mit einer Verbindung der Formel I nach Anspruch 1 behandelt worden sind.

## Claims

1. Trialkanoyloxysilanes of the formula I

$R^1-A^1-A^2-O-C_nH_{2n-Si(OOCR^2)_3}$!
wherein $R^1$ is H or an alkyl group of 1-10 C atoms wherein one or two non-adjacent $CH_2$ groups may also be replaced by oxygen atoms, or is F, Cl, Br or CN, $R^2$ is an alkyl group of 1-5 C atoms, $A^1$ and $A^2$ are each 1,4-phenylene or 1,4-cyclohexylene groups and n is 2, 3, 4, 5 or 6.

2. 1-Triacetoxysilyl-3-(p-trans-4-propylcyclohexyl-phenoxy)-propane.

3. Process for preparing trialkanoyloxysilanes of the formula I according to Claim 1, characterised in that a trichlorosilane of the formula II

$R^1-A^1-A^2-O-C_nH_{2n}-SiCl_3$

wherein $R^1$, $A^1$, $A^2$ and n are as defined above, is reacted with an acid anhydride of the formula III

$(R^2CO)_2O$ III

wherein $R^2$ is as defined above.

4. Use of compounds of the formula I according to Claim 1 as components of liquid-crystalline dielectric media for visual electronic display elements.

5. Liquid-crystalline dielectric medium for visual electronic display elements having at least two liquid-crystalline components, characterised in that at least one component is a compound of the formula I according to Claim 1.

6. Visual electronic display element, characterised in that it contains a dielectric medium according to Claim 5.

7. Use of compounds of the formula I according to Claim 1 for generating a homoeotropic orientation of liquid-cristalline phases on surfaces.

8. Visual electronic display element, characterised in that it contains surfaces which have been treated with a compound of the formula I according to Claim 1.

## Revendications

1. Trialcanoyloxysilanes de formule I

$R^1-A^1-A^2-O-C_nH_{2n}-Si(OOCR^2)_3$ I

dans laquelle
$R^1$ est H, un groupe avec 1-10 atomes de carbone, dans lequel un ou deux groupes $CH_2$ non voisins peuvent être remplacés par des atomes O, par F, Cl, Br ou CN,
$R^2$ est un groupe alkyle avec de 1 à 5 atomes de carbone,
$A^1$ et $A^2$ représentent chacun des groupes 1,4-phénylène ou 1,4-cyclohexylène et
n est 2, 3, 4, 5 ou 6.

2. 1-triacétoxysilyl-3-(p-trans-4-propyl-cyclohexylphénoxy)-propane.

3. Procédé de préparation de trialcanoyloxysilanes de formule I selon la revendication 1, caractérisé en ce qu'on fait réagir un trichlorosilane de formule II

$R^1-A^1-A^2-O-C_nH_{2n}-SiCl_3$ II

dans laquelle
$R^1$, $A^1$, $A^2$ et n ont les significations données, avec un anhydride d'acide de formule III

$(R^2CO)_2O$ III

dans laquelle
$R^2$ a la signification donnée.

4. Utilisation des composés de formule I selon la revendication 1 comme composants de diélectriques à cristaux liquides pour des éléments d'affichage électrooptique.

5. Diélectrique à cristaux liquides pour des éléments d'affichage électrooptiques avec au moins deux composants à cristaux liquides caractérisé en ce qu'au moins un composant est un composé de formule I selon la revendication 1.

6. Elément d'affichage électrooptique, caractérisé en ce qu'il contient un diélectrique selon la revendication 5.

7. Utilisation de composés de formule I selon la revendication 1 à la fabrication d'une orientation homéotrope de phases à cristaux liquides déposées sur des surfaces.

8. Elément d'affichage électrooptique caractérisé en ce qu'il contient des surfaces qui ont été traitées avec un composé de formule I selon la revendication 1.